# EUROPÄISCHE PATENTSCHRIFT

(11) **EP 2 607 118 B1**
(45) Veröffentlichungstag und Bekanntmachung des Hinweises auf die Patenterteilung: **12.09.2018**
(21) Anmeldenummer: 12197715.1
(22) Anmeldetag: 18.12.2012
(51) Int. Cl.: B60H 1/00, F24F 13/20, H05K 5/00

(54) **Gehäuse insbesondere für eine Kraftfahrzeugklimaanlage**
Housing, in particular for a motor vehicle air conditioning device
Boîtier, notamment pour une climatisation de véhicule automobile

(30) Priorität: 19.12.2011 DE 102011089092
(43) Veröffentlichungstag der Anmeldung: 26.06.2013
(73) Patentinhaber: MAHLE Behr GmbH & Co. KG, 70469 Stuttgart (DE)
(72) Erfinder: Grieb, Dipl.-Ing Andreas, 70499 Stuttgart (DE); Bürkle, Dipl.-Ing. Rainer, 70736 Fellbach (DE); Feith, Dipl.-Ing. Thomas, 70825 Korntal-Münchingen (DE)
(74) Vertreter: Grauel, Andreas

(56) Entgegenhaltungen:
- EP-A1- 0 761 984
- WO-A1-2006/034861
- CH-A5- 676 627
- DE-A1-102006 052 732
- DE-U1- 9 420 291
- FR-A1- 2 787 746
- JP-A- 2004 330 968

## Beschreibung

### Technisches Gebiet

Die Erfindung betrifft ein Gehäuse insbesondere für eine Kraftfahrzeugklimaanlage nach dem Oberbegriff der Ansprüche 1 und 9.

### Stand der Technik

Klimaanlagen für Kraftfahrzeuge (wie zum Beispiel PKWs und NKWs) werden aus Kunststoff gespritzt. Die Klimaanlagegerätegehäuse werden als dünnwandige Hohlkörper ausgeführt. Weil im Kunststoffspritzverfahren nur bedingt Hinterschnitte realisiert werden können, werden die Gehäuse aus mehreren Teilen aufgebaut, die dann zusammengebaut werden. Zudem müssen Komponenten wie Wärmetauscher und Klappen im Klimagerät verbaut werden, was bei einem geschlossenen Gehäuse nur bedingt möglich wäre.

Zur Abdichtung der Gehäuseteile gegeneinander werden jeweils einteilige Dichtsysteme in Form einer Nut-Feder-Geometrie verwendet. Das heißt, es wird kein Zusatzmaterial zur Abdichtung verwendet.

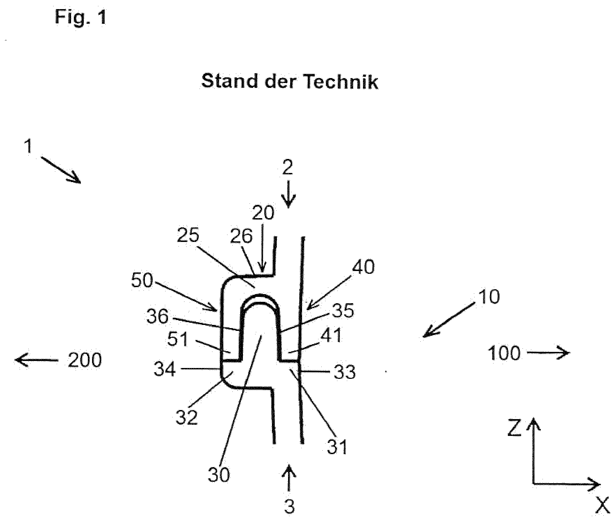

In der Figur 1 wird eine solche aus dem Stand der Technik bekannte Nut-Feder-Verbindung 10 dargestellt, die die Gehäuseteile 2, 3 eines Gehäuses 1 miteinander verbindet.

Es wird eine nutförmige Geometrie (Nut) 20 an einem Gehäuseteil 2 und eine federförmige Geometrie (Feder) 30 an einem anderen Gehäuseteil 3 angebracht. Diese Nut-Feder-Geometrie 10 hat zusätzlich die Aufgabe, eine Montagehilfe darzustellen, damit die Gehäuseteile 2,3 leicht und passgenau zueinander positioniert und montiert werden können. Die Fixierung der Gehäuseteile 2,3 erfolgt dann mit Metallklipsen oder Schrauben (nicht dargestellt).

Die Nut 20 umfasst zwei Nutschenkel 40, 50, wobei der Nutschenkel 40 auf der dem Gehäuseinneren 100 zugewandten Seite der Nut 20 und der Nutschenkel 50 auf der dem Gehäuseäußeren 200 zugewandten Seite der Nut 20 angeordnet ist. In dem in der Figur 1 dargestellten eingebrachten Zustand der Feder 30 in die Nut 20 liegen die nutseitigen Schultern 41, 51 jeweils auf den entsprechenden federseitigen Schultern 31, 32 auf. In der Figur 1 liegt die Feder 30 auf der Nutinnenseite an ihren Federflanken 35, 36 auf.

Das Dichtprinzip der Nut-Feder-Verbindung 10 ist in erster Linie die Auflage der Schulterflächen der inneren nutseitigen Schulter 41 und der äußeren nutseitige Schulter 51. Ein Labyrinth durch eine Nut-Feder-Verbindung 10 hat eine weitere, aber untergeordnete Dichtwirkung.

Bei der in der Figur 1 dargestellten Nut-Feder-Verbindung 10 sollten beide Nutschultern 41, 51 zur Auflage kommen. Dies ist aber aufgrund von Fertigungstoleranzen selten der Fall. Die Dichtrichtung ist die mit Z gekennzeichnete Richtung. Eine zu der Dichtrichtung Z senkrecht verlaufende Richtung ist mit X gekennzeichnet. Die Gesamtbreite der Nut-Feder-Verbindung beträgt in diesem Beispiel 5 mm, und die Gesamthöhe der Nut-Feder-Verbindung beträgt 7,3 mm.

Dabei wird die Gesamtbreite der Nut-Feder-Verbindung 10 zwischen der dem Gehäuseinneren 100 zugewandten Seite 33 der federseitigen Schulter 31 und der dem Gehäuseäußeren 200 zugewandten Seite 34 der federseitigen Schulter 32 gemessen. Die Gesamthöhe der Nut-Feder-Verbindung 10 wird zwischen der der Feder 30 abgewandten Seite 26 des Nutbodens 25 und der der Nut 20 abgewandten Seite 37 der federseitigen Schulter 32 gemessen.

Die Nutschenkel (Nutschulter) 40, 50 sind jeweils am Ende 1,2 mm dick. Die Schräge auf den Innenseiten beider Nutschenkel 40, 50 beträgt gegenüber der Z-Richtung jeweils 2°. Die Nuttiefe beträgt 4,6 mm. Die Wandstärke der sich unter der Feder 30 erstreckenden Gehäusewand des federseitigen Gehäuseteils beträgt 1,8 mm. Die Federbreite beträgt unten 2,4 mm. Die Federhöhe liegt bei 4,2 mm. Der Winkel auf der Federinnenseite, das heißt, der Winkel zwischen der Z-Richtung und der inneren Federflanke 35, und der Winkel auf der Federaußenseite, das heißt, der Winkel zwischen der Z-Richtung und der Federflanke 36, betragen jeweils ebenfalls 2°. Der Abstand zwischen der Nut 20 und der Feder 30 pro Seite, das heißt, der Abstand zwischen einem der Nutschenkel 40, 50 und der Feder 30 liegt jeweils bei 0,1 mm. Typischerweise werden Wandstärken der Gehäusewände von 1,8 mm verwendet.

Nachteilig bei den aus dem Stand der Technik bekannten Nut-FederVerbindungen ist, dass aufgrund der Fertigungstoleranzen bei Kunststoffspritzgussteilen, vor allem aufgrund von Verzug und Schwindung, die Nutschulterflächen nicht durchgängig zur Anlage kommen. Oft kommt nur eine Nutschulter (Nutflanke) zur Anlage, und die Nutschulter mit Anlage wechselt beispielsweise von außen nach innen. Da im Bereich der Nut-Feder-Verbindung Luft quer strömen kann, tritt sie an anderen Bereichen aus. Teilweise gibt es auch gar keinen Kontakt der nutseitigen Schultern zu den federseitigen Schultern. Hier tritt Luft direkt aus. Diese Luftleckage reduziert die Luftleistung, die für die Klimatisierung des Fahrzeuginnenraums zur Verfügung steht.

Aus dem Stand der Technik sind weiterhin elastische Nut-Feder-Systeme bekannt, die entweder eine elastische Feder oder eine elastische Nut umfassen. Systeme mit elastischer Feder sind in den Dokumenten EP 1 510 380 B1, EP 0 414 946 B1 und DE 199 43 278 A1 beschrieben. Systeme mit elastischer Nut sind in den Dokumenten DE 44 25 362 A1 und EP 2 284 027 A2 beschrieben. Nachteilig bei solchen elastischen Nut-Feder-Systemen ist, dass sie im Bereich von Radien weniger Elastizität haben. Dadurch können Fertigungstoleranzen nicht mehr ausgeglichen werden, was zu einer erhöhten Leckage führt. Grundsätzlich führt eine elastische Verformung auch zu höheren Montagekräften.

Aus dem Stand der Technik sind auch Feder-Nut-Systeme mit mindestens einem Hinterschnitt an der Nut bekannt. Solche Feder-Nut-Systeme sind beispielsweise in den Dokumenten DE 94 20 291 U1 und EP 2 284 027 A2 beschrieben. Nachteilig bei solchen Feder-Nut-Systemen ist, dass die Montagekraft deutlich erhöht ist. Zudem ist die Herstellung der Hinterschnitte mit zusätzlichem fertigungstechnischem Aufwand verbunden. Das Dokument FR 2 787 746 A1 zeigt ein Gehäuse gemäß Oberbegriff des Anspruchs 1.

Das Dokument WO 2006/034861 A1 zeigt ein Gehäuse gemäß Oberbegriff des Anspruchs 9.

### Darstellung der Erfindung, Aufgabe, Lösung, Vorteile

Es ist die Aufgabe der Erfindung, ein aus miteinander verbundenen Gehäuseteilen ausgebildetes Gehäuse insbesondere für eine Klimaanlage bereitzustellen, bei dem die Nut-Feder-Verbindung zwischen den Gehäuseteilen eine sichere und zuverlässige Verbindung und Abdichtung auch bei Verformungen gewährleistet.

Dies wird erreicht mit den Merkmalen des Anspruchs 1, und alternativ mit den Merkmalen des Anspruchs 9, wonach ein Gehäuse insbesondere für eine Kraftfahrzeugklimaanlage bereitgestellt wird, das aus miteinander verbindbaren Gehäuseteilen ausgebildet ist und eine von einem ersten und einem zweiten Nutschenkel begrenzte Nut an einem ersten Gehäuseteil und eine Feder an einem zweiten Gehäuseteil aufweist. Dabei ist die Feder zur Verbindung der Gehäuseteile in der Nut angeordnet. Erfindungsgemäß sind der erste und der zweite Nutschenkel derartig ausgebildet, dass in dem eingebrachten Zustand der Feder in der Nut mindestens ein Nutschenkel an seinem freien Ende beabstandet von einer entsprechenden federseitigen Auflageschulter des zweiten Gehäuseteils ist.

Erfindungsgemäß wird somit ein Gehäuse insbesondere für die Klimaanlage eines Kraftfahrzeuges bereitgestellt, die eine hinsichtlich einer möglichen Luftleckage verbesserte oder alternative Geometrie zur Abdichtung der Gehäuseteile unter der Berücksichtigung der Fertigungstoleranzen und der Montageaufforderungen aufweist. Die Reduzierung einer möglichen Luftleckage leistet einen wesentlichen Beitrag zur Steigerung der Energieeffizienz einer mit einem erfindungsgemäßen Gehäuse versehenen Klimaanlage (Klimagerät). Dadurch werden auch der Benzinverbrauch und der CO₂-Ausstoß eines Kraftfahrzeuges mit einer solchen Klimaanlage deutlich reduziert.

Bei einer Variante der Erfindung wird eine Verbesserung der üblichen, aus dem Stand der Technik bekannten Nut-Feder-Verbindung durch das Zurücksetzen einer Nutschulter erreicht. Insbesondere wird dabei die äußere Nutschulter gekürzt, da hier werkzeugbedingt oft Trenngrate auftreten, die zu Undichtigkeiten und zu akustischen Ereignissen wie Quietschen und Knarzen führen können.

Durch das Kürzen der Nutschulter kommt der Trenngrad nicht mehr in Kontakt mit der Auflage der Federseite. Auch die innere Nutschulter kann erfindungsgemäß gekürzt werden. Vorteilhaft hierbei ist die Realisierung eines besseren Kraftflusses von dem oberen zu dem unteren Gehäuseteil bei einer Verbindung mit Schrauben, Metallklammern oder lokalen Schweißstellen.

Durch das Zurücksetzten einer Nutschulter wird sichergestellt, dass beim Verzug der Gehäusewände nur die eine Nutschulter aufliegt, wobei auch vermieden wird, dass die Auflage zwischen innen und außen wechselt. Bei der erfindungsgemäßen Feder-Nut-Verbindung mit einer zurückgesetzten Nutschulter ist die Hauptdichtrichtung, wie bei der in der Figur 1 dargestellten Nut-Feder-Verbindung, die Richtung, in die die Feder zur Verbindung der Gehäuseteile in die Nut einzuführen ist (Z-Richtung).

Erfindungsgemäß ist zumindest der Nutschenkel, der in dem eingebrachten Zustand der Feder in der Nut auf der entsprechenden federseitigen Schulter des zweiten Gehäuseteils aufliegt, an seinem freien Ende aufgerundet.

Erfindungsgemäß bilden die Verlängerungen der dem Nutinneren zugewandten Nutschenkelseiten und die Verlängerungen der zwei Federflanken, an denen die Feder in dem eingebrachten Zustand der Feder in der Nut auf der Nutschenkelinnenfläche aufliegt, spitze Winkel, insbesondere unterschiedliche spitze Winkel. Vorzugsweise bildet die Dichtrichtung, in der die Feder zur Verbindung der Gehäuseteile in die Nut einzuführen ist, unterschiedliche spitze Winkel mit den Verlängerungen der dem Nutinneren zugewandten Nutschenkelseiten. Insbesondere bildet die Dichtrichtung, in der die Feder zur Verbindung der Gehäuseteile in die Nut einzuführen ist, unterschiedliche spitze Winkel mit den Verlängerungen der zwei Federflanken.

Bei einer weiteren bevorzugten Ausführungsform der Erfindung ist/sind der erste und/oder der zweite Nutschenkel zu seinem freien Ende sich verjüngend ausgebildet. Insbesondere ist der erste oder der zweite Nutschenkel dünner als der zweite oder der erste Nutschenkel ausgebildet.

Bei einer besonders vorteilhaften Variante der Erfindung wird beispielsweise die innere Nutschulter zurückgesetzt, sodass nur die äußere Nutschulter aufliegt. Bei dieser Ausführungsform der Erfindung ist insbesondere die äußere Nutschulter verrundet, damit die Linienauflage sichergestellt ist.

Zusätzlich werden Trenngrate von der Kontaktstelle zu der entsprechenden federseitigen Schulter weg ans Ende des Radius verschoben. Diese Verschiebung der Trenngrate bringt erhebliche akustische Vorteile bezüglich des Knarzens mit sich.

Ferner kann der spitze Winkel auf der Feder und in der Nut im Vergleich zu der in der Figur 1 dargestellten Feder-Nut-Verbindung erhöht werden. Dadurch wird mehr Spiel bei der Montage der Gehäuseteile und damit auch ein leichteres Finden der Teile gewährleistet.

Erfindungsgemäß werden die nutseitigen und die federseitigen Gehäuseteile an die Anforderungen der Spritzgusstechnik insbesondere dadurch angepasst, dass keine Wanddickensprünge und keine Materialanhäufungen auftreten, wenn Wanddickenunterschiede dann zum Ende des Bauteils hin die Wandstärke reduzieren.

Bei dieser Variante der Erfindung ist die Dichtrichtung auch die Z-Richtung.

Bei einer weiteren besonders bevorzugten Variante wird der Abstand der äußeren Nutschenkel zu der äußeren federseitigen Schulter auf Null reduziert. Eine Überlappung zwischen dem inneren Nutschenkel und der Feder wird durch die Verwendung von entsprechenden unterschiedlichen spitzen Winkeln auf der Feder und in der Nut erreicht. Dabei ist der innere Nutschenkel dünner und damit auch weicher als der äußere Nutschenkel ausgeführt. Ferner ist die innere Nutschulter zurückgesetzt, sodass nur die äußere Nutschulter aufliegt. Auch hierbei ist die äußere Nutschulter verrundet, damit die Linienauflage sichergestellt ist. Auch werden Trenngrate von der Kontaktstelle zu der entsprechenden federseitigen Schulter weg ans Ende des Radius verschoben, wodurch auch hier akustische Vorteile bezüglich des Knarzens erreicht werden.

Bei dieser Variante ist der Verlauf der Wandstärke über die Nut mit geringen Wandstärkenänderungen ausgeführt, insbesondere über den äußeren Nutschenkel zur Auflage auf der entsprechenden federseitigen Schulter und weiter über die Gehäusewand unter der Feder. Dadurch wird eine steife Verbindung zwischen den Gehäuseteilen erreicht. Die Krafteinleitung durch Schrauben oder Metallklammern wird über diesen Bereich sichergestellt. Somit wird eine Aufteilung dieser erfindungsgemäßen Nut-Feder-Verbindung in einem elastischen Bereich mit einer geringen Wandstärke innen und einem steifen Bereich mit höherer Wandstärke außen erreicht.

Ferner wird bei dieser Variante der spitze Winkel auf der Feder und in der Nut am äußeren Nutschenkel gegenüber der in der Figur 1 dargestellten Nut-Feder-Verbindung erhöht. Dadurch wird mehr Spiel bei der Montage der Gehäuseteile und damit auch ein leichteres Finden der Teile erreicht.

Anders als bei der in der Figur 1 dargestellten Nut-Feder-Verbindung gibt es hier zwei senkrecht aufeinander verlaufende Hauptdichtrichtungen. Eine erste Hauptdichtrichtung verläuft, wie bei der in der Figur 1 dargestellten Nut-Feder-Verbindung, entlang der Z-Richtung. Die andere Hauptdichtrichtung verläuft entlang der auf der ersten Hauptdichtrichtung senkrechten Verbindungslinie zwischen den Nutschenkeln und somit auch entlang einer in der Figur 1 mit X gekennzeichneten Richtung.

Bei dem Gehäuse sind die Feder und die Nut insbesondere derartig ausgebildet, dass die Federspitze in dem eingebrachten Zustand der Feder in der Nut auf dem Nutboden aufliegt.

Bei einer weiteren Variante können beispielsweise beide Nutschultern zurückgesetzt werden, sodass die Auflage an der Federspitze im Nutgrund (Nutboden) erfolgt. Vorteilhaft ist hier, dass die abgerundete Form der Federspitze auch bei verzogenen Wänden eine Linienberührung begünstigt. Dabei entfällt der Radius des Nutgrundes, der Nutboden ist insbesondere durch eine ebene Fläche ausgebildet. Zudem haben die frei hängenden Nutschenkel die Möglichkeit an den Flanken mit der Feder in Kontakt zu kommen, was eine zusätzliche Abdichtung zur Folge hat.

Die Hauptdichtrichtung verläuft auch hier entlang der Z-Richtung. Je nach Verzug kann hier auch eine zweite Nebendichtrichtung existieren, die entlang der X-Richtung verläuft.

Weiterhin wird erfindungsgemäß ein Gehäuse insbesondere für eine Kraftfahrzeugklimaanlage bereitgestellt, das aus miteinander verbindbaren Gehäuseteilen ausgebildet ist und eine von einem ersten und von einem zweiten Nutschenkel begrenzte Nut an einem ersten Gehäuseteil und eine Feder an einem zweiten Gehäuseteil umfasst. Ferner ist die Feder zur Verbindung der Gehäuseteile in der Nut angeordnet und der erste Nutschenkel liegt in dem eingebrachten Zustand der Feder in der Nut auf einer entsprechenden federseitigen Auflageschulter des zweiten Gehäuseteils auf. Erfindungsgemäß ist die Feder derartig an dem zweiten Gehäuseteil angeordnet und die federseitige Gehäusewand weist eine derartige Geometrie auf, dass der zweite Nutschenkel, der länger als der erste Nutschenkel ist, in dem eingebrachten Zustand der Feder in der Nut auf einer entsprechenden Auflagefläche der federseitigen Gehäusewand des zweiten Gehäuseteils aufliegt.
Vorzugsweise ist die federseitige Gehäusewand des zweiten Gehäuseteils im Bereich seiner Auflagefläche für den zweiten Nutschenkel mit einem vorbestimmten Übermaß gegenüber dem zweiten Nutschenkel im Bereich seiner mit der Auflagefläche kontaktierbaren Fläche ausgebildet.

Insbesondere bildet die federseitige Gehäusewand einen vorbestimmten Winkel mit einer Dichtrichtung, in der die Feder zur Verbindung der Gehäuseteile in die Nut einzuführen ist, und/oder der zweite Nutschenkel ist zu seinem freien Ende sich verjüngend, beispielsweise sich stufenartig verjüngend, ausgebildet.

Vorzugsweise ist der zweite Nutschenkel derartig ausgebildet, dass der zweite Nutschenkel in dem eingebrachten Zustand der Feder in der Nut der Geometrie der federseitigen Gehäusewand mit dem vorbestimmten Übermaß folgt.

Anders ausgedrückt, bei einer weiteren besonders bevorzugen Variante der Erfindung ist das Gehäuse mit einer Nut versehen, die beispielsweise einen längeren, elastischen, inneren Nutschenkel aufweist. Außer, dass der elastische Nutschenkel in Radien versteift ist, weist diese erfindungsgemäße Nut-Feder-Verbindung zwei gleichwertige Dichtrichtungen auf, nämlich die Schulterauflage in der Z-Richtung und den elastischen Nutschenkel in der X-Richtung. Da hier beide Dichtrichtungen gleichwertig sind und sich auch nicht gegenseitig in ihrer Funktion behindern, wird hier eine mögliche Leckage in besonderem Maß verringert.

Zudem lässt diese Variante der Erfindung einen Verzug der Gehäusewände ohne eine Erhöhung der Leckage zu. Fallen die Gehäusewände nach innen, neigt die äußere Nutschulter dazu, abzuheben. Dafür verstärkt sich der Kontakt zwischen dem inneren elastischen Nutschenkel und der Gehäusewand. Fallen die Gehäusewände nach außen, so kann der innere elastische Nutschenkel von der Gehäusewand abheben, wobei aber der Kontakt zwischen der Schulter des äußeren Nutschenkels und der entsprechenden federseitigen Schulter verstärkt wird.

Somit wird durch die zwei senkrecht aufeinander verlaufenden Dichtrichtungen jeder mögliche Verzug ausgeglichen. Die Geometrien der Nut und der Feder an der Außenseite (an der dem Gehäuseäußeren zugewande Seite) können den korrespondierenden Geometrien der Nut und der Feder entsprechen, die in den zuvor erläuterten Varianten der Erfindung beschrieben worden sind.

Ebenso verhalten sich die Geometrien der Nut und der Feder an der Innenseite (an der dem Gehäuseinneren zugewandten Seite) im oberen Bereich bis etwa zu der Hälfte der Federhöhe. Ab hier verjüngt sich die Wandstärke des inneren Nutschenkels bis der innere Nutschenkel am Ende eine vorbestimmte Dicke erreicht.

Der innere Nutschenkel ist länger als der äußere Nutschenkel. Der Übergang am inneren Nutschenkel in die Verjüngung kann als Stufe oder aber kontinuierlich bis zum Erreichen der vorbestimmten Dicke am Ende ausgeführt sein. An der Federseite entfällt die innere Schulter. Die Gehäusewand verläuft auf der Federinnenseite unter einem vorbestimmten Winkel zu der Z-Richtung.

Zwischen dem Ende des inneren Nutschenkels und der Innenwand der Federseite wird in der Konstruktionslage ein vorbestimmtes Übermaß vorgesehen.

Eine weitere Ausführung dieser Variante der Erfindung sieht eine parallele Ausgestaltung des Kontaktbereichs zwischen dem inneren Nutschenkel und der Innenwand der Federseite (federseitiges Gehäuseteils) vor. Die Innenwand der Federseite folgt dabei der Geometrie des inneren Nutschenkels mit einem vorbestimmten Übermaß. Der Nutschenkel ist dabei nahezu, das heißt, abgesehen von den minimal notwendigen Ausformschrägen, parallel zu der Z-Richtung.

Durch die parallele Ausgestaltung (Ausformung) wird erreicht, dass auch beim Vorliegen einer entlang der Z-Richtung erfolgten Verschiebung der Nutseite (nutseitiges Gehäuseteil) zur Federseite (federseitiges Gehäuseteil) der innere Nutschenkel trotzdem in Kontakt mit der Federseite bleibt und weiterhin abdichtet.

Erfindungsgemäß wird weiterhin ein Gehäuse insbesondere für eine Kraftfahrzeugklimaanlage bereitgestellt, das aus mindestens zwei miteinander verbindbaren Gehäuseteilen ausgebildet ist und ein nutartiges Profil aufweist, das von einem ersten und einem zweiten Schenkel begrenzt ist und an einem zur Verbindung der Gehäuseteile vorgesehenen Kontaktbereich eines ersten Gehäuseteils der zwei Gehäuseteile angebracht ist. Erfindungsgemäß weist ein zweites Gehäuseteil der zwei Gehäuseteile an seiner zur Verbindung der zwei Gehäuseteile vorgesehenen Kontaktbereiche ein L-förmiges Profil auf. Dabei ist der erste Schenkel des nutartigen Profils kürzer als der zweite Schenkel des nutartigen Profils ausgebildet, und die beiden Schenkel des nutartigen Profils liegen in dem verbundenen Zustand der zwei Gehäuseteile an ihren freien Enden jeweils auf demselben Schenkel des L-förmigen Profils des zweiten Gehäuseteiles auf.

Insbesondere weist der Schenkel des L-förmiges Profils des zweiten Gehäuseteils, auf dem die Schenkel des nutartigen Profils in dem eingebrachten Zustand der Feder in der Nut aufliegen, an seinem freien Ende eine derartig ausgebildete Aussparung auf, dass der zweite Schenkel des nutartigen Profils des ersten Gehäuseteils in dem verbundenen Zustand der zwei Gehäuseteile das zweite Gehäuseteil im Bereich der Aussparung überlappt.

Mit anderen Worten, es wird bei einer vorteilhaften Variante der Erfindung der elastische Schenkel eines Gehäuseteils um 90° gedreht, um die vorhin erwähnte Versteifung von elastischen Schenkeln in Radien zu verringern. Somit liegt der elastische Schenkel senkrecht auf der Montagerichtung. Bei dieser Variante der Erfindung ist die Dichtrichtung die Z-Richtung, die entlang der Montagerichtung verläuft. Durch das Übermaß des elastischen Schenkels mit einem gegenüberliegenden Gehäuseteil kann Verzug ausgeglichen werden.

Bei dieser Variante der Erfindung wird das System der Nut-Feder-Verbindung nahezu verlassen. Das untere Gehäuseteil wird im Bereich der Kontaktstelle als einfaches L-Profil ausgeführt. Die obere Gehäusehälfte ist in der Grundform ebenfalls L-förmig. Allerdings wird das L-Profil in der Mitte von unten her verjüngt, sodass sich eine vorbestimmte Wandstärke ergibt. Die Aussparung des L-Profils des oberen Gehäuseteils kann in der Form eckig oder verrundet sein. In Verlängerung der Gehäusewand ist das obere Gehäuseteil im Kontakt mit dem unteren Gehäuseteil. Am Ende der L-förmigen Ausgestaltung überlappt das obere Gehäuseteil das untere Gehäuseteil innerhalb eines vordefinierten Bereiches.

Insbesondere wird bei der erfindungsgemäßen Nut-Feder-Verbindung ein vorbestimmtes Übermaß mindestens einer Komponente verwendet. Eine Verbesserung der Abdichtungsfähigkeit der erfindungsgemäßen Nut-Feder-Verbindung kann beispielsweise dadurch erreicht werden, dass Dichtelemente in dem Nut-Feder-System eingelegt werden, oder auch durch Ankleben, Verkleben oder Verschweißen der Nut-Feder-Verbindung.

Erfindungsgemäß werden ohne eine Erhöhung des Montageaufwands mehrere die Fertigungstoleranzen ausgleichende Geometrien für eine Gehäuseabdichtung bereitgestellt mit einer Verringerung der Luftleckage.

Erfindungsgemäß wird ferner eine Kraftfahrzeugklimaanlage mit einem erfindungsgemäßen Gehäuse bereitgestellt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage von Ausführungsbeispielen anhand der Zeichnungen näher erläutert. Es zeigen:
- Fig. 1: einen Querschnitt einer aus dem Stand der Technik bekannten Nut-Feder-Verbindung in einem eingebrachten Zustand einer Feder in einer Nut,
- Fig. 2: einen Querschnitt einer Nut-Feder-Verbindung in dem eingebrachten Zustand einer Feder in einer Nut gemäß einer ersten Ausführungsform
- Fig. 3: einen Querschnitt einer Nut-Feder-Verbindung in dem eingebrachten Zustand einer Feder in einer Nut gemäß einer zweiten Ausführungsform
- Fig. 4: einen Querschnitt einer Nut-Feder-Verbindung in dem eingebrachten Zustand einer Feder in einer Nut gemäß einer dritten Ausführungsform gemäß der ersten Alternative der Erfindung.
- Fig. 5: einen Querschnitt einer Nut-Feder-Verbindung in dem eingebrachten Zustand einer Feder in einer Nut gemäß einer vierten Ausführungsform gemäß der ersten Alternative der Erfindung.
- Fig. 6: einen Querschnitt einer Nut-Feder-Verbindung in dem eingebrachten Zustand einer Feder in einer Nut gemäß einer fünften Ausführungsform
- Fig. 7: einen Querschnitt einer Nut-Feder-Verbindung in dem eingebrachten Zustand einer Feder in einer Nut gemäß einer sechsten Ausführungsform
- Fig. 8: einen Querschnitt einer mechanischen Verbindung zur Verbindung von zwei Gehäuseteilen in dem verbundenen Zustand der Gehäuseteile gemäß einer siebten Ausführungsform gemäß der zweiten Alternative der Erfindung.

### Bevorzugte Ausführung der Erfindung

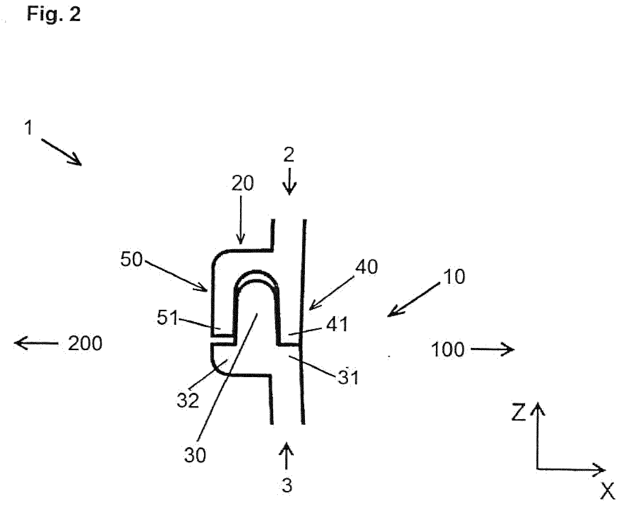

In der Figur 2 sind zwei Gehäuseteile 2, 3 eines Gehäuses 1 einer Kraftfahrzeugklimaanlage (nicht dargestellt) abgebildet. Die Gehäuseteile 2, 3 sind mittels einer Nut-Feder-Verbindung 10 miteinander verbunden. Die Figur 2 zeigt einen Querschnitt der Nut-Feder-Verbindung 10 in dem eingebrachten Zustand einer Feder 30 in einer Nut 20 gemäß einer ersten Ausführungsform der Erfindung. Die Nut 20 ist an dem Gehäuseteil 2 und die Feder 30 an dem anderen Gehäuseteil 3 angebracht. Die Nut 20 umfasst zwei Nutschenkel 40, 50, wobei der Nutschenkel 40 auf der dem Gehäuseinnere 100 zugewandten Seite der Nut 20 ist und der Nutschenkel 50 auf der dem Gehäuseäußere 200 zugewandten Seite der Nut 20 angeordnet ist.

Bei der in der Figur 2 dargestellten Feder-Nut-Verbindung 10 in dem eingebrachten Zustand der Feder 30 in der Nut 20 liegt nur die Schulter 41 der inneren Nutschenkel 40 auf der federseitigen Schulter 31 des Gehäuseteils 3 auf. Der äußere Nutschenkel 50 ist kürzer als der innere Nutschenkel 40 und weist eine zurückgesetzte Schulter 51 auf, die nicht auf der entsprechenden federseitigen Schulter 32 aufliegt.

Die Dichtrichtung der in der Figur 2 dargestellten Nut-Feder-Verbindung 10 ist die mit Z gekennzeichnete Richtung. Eine zu der Dichtrichtung Z senkrecht verlaufende Richtung ist mit X gekennzeichnet.

In allen hier vorkommenden Figuren werden gleiche Komponenten mit gleichen Bezugszeichen gekennzeichnet.

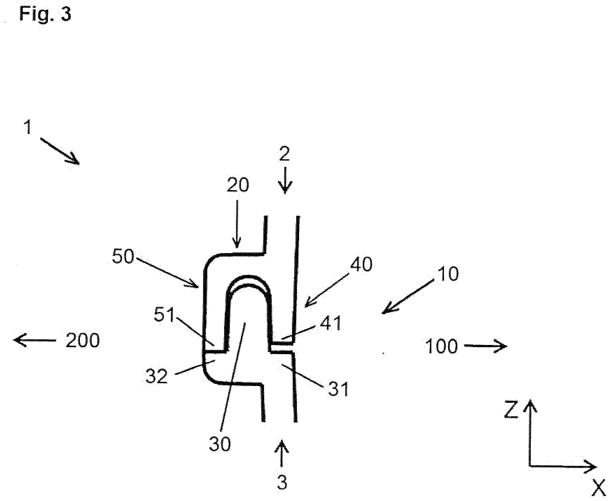

Die Figur 3 zeigt einen Querschnitt einer Nut-Feder-Verbindung 10 in dem eingebrachten Zustand einer Feder 30 in der Nut 20 gemäß einer zweiten Ausführungsform der Erfindung. Bei der in der Figur 3 dargestellten Feder-Nut-Verbindung 10 in dem eingebrachten Zustand der Feder 30 in der Nut 20 liegt nur die Schulter 51 der äußeren Nutschenkel 50 auf der federseitigen Schulter 32 des Gehäuseteils 3 auf. Der innere Nutschenkel 40 ist kürzer als der äußere Nutschenkel 50 und weist eine zurückgesetzte Schulter 41 auf, der beabstandet gegenüber der entsprechenden federseitigen Schulter 31 ist.

Die Abmessungen der in den Figuren 2 und 3 dargestellten Nut-FederVerbindungen 10 können im Allgemeinen den Abmessungen der in der Figur 1 dargestellten Nut-Feder-Verbindung entsprechen. Die Ausnahme ist die zurückgesetzte nutseitige Schulter 41 oder 51. Der Abstand zwischen einer zurückgesetzten Schulter 41 oder 51 und der entsprechenden federseitigen Schulter 31 oder 32 kann beispielsweise zwischen 0,2 und 0,8 mm, idealerweise bei 0,5 mm liegen.

Die Dichtrichtung der in der Figur 3 dargestellten Nut-Feder-Verbindung 10 ist die mit Z gekennzeichnete Richtung.

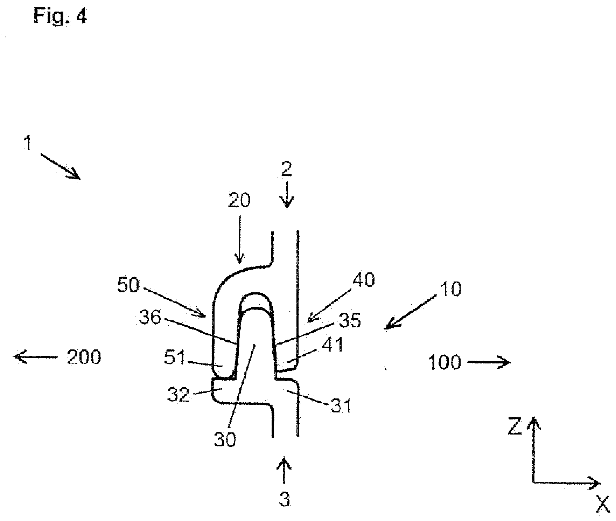

Die Figur 4 zeigt einen Querschnitt einer Nut-Feder-Verbindung 10 in dem eingebrachten Zustand einer Feder 30 in der Nut 20 gemäß einer dritten Ausführungsform der Erfindung. Bei der in der Figur 4 dargestellten Feder-Nut-Verbindung 10 in dem eingebrachten Zustand der Feder 30 in die Nut 20 liegt nur die verrundete Schulter 51 der äußeren Nutschenkel 50 auf der federseitigen Schulter 32 des Gehäuseteils 3 auf. Der innere Nutschenkel 40 ist kürzer als der äußere Nutschenkel 50 und weist eine zurückgesetzte Schulter 41 auf, die nicht auf der entsprechenden federseitigen Schulter 31 aufliegt. Die Winkel auf der Feder 30 und in der Nut 20, das heißt, der von den Verlängerungen der Federflanken 35, 36 beziehungsweise von den Verlängerungen der dem Nutinneren zugewandten Nutschenkelseiten (Nutschenkelinnenseiten) gebildete Winkel sind jeweils größer als bei der in der Figur 1 dargestellten Nut-Feder-Verbindung.

Die Dichtrichtung der in der Figur 4 dargestellten Nut-Feder-Verbindung 10 ist die mit Z gekennzeichnete Richtung.

Die Abmessungen und insbesondere die Gesamtbreite und die Gesamtdicke der in der Figur 4 dargestellten Nut-Feder-Verbindung 10 entsprechen den Abmessungen der in der Figur 1 dargestellten Nut-Feder-Verbindung. Dabei liegt die Gesamtbreite der Nut-Feder-Verbindung 10 zwischen 4,3 und 5 mm, idealerweise bei 4,5 mm. Die Gesamthöhe der Nut-Feder-Verbindung 10 liegt zwischen 7 und 8 mm, idealerweise bei 7,3 mm.

Der innere und der äußere Nutschenkel 50 können am Ende jeweils eine Dicke zwischen 1,0 und 1,4 mm, idealerweise von 1,1 mm haben. Die Schräge auf den dem Nutinneren zugewandten Nutschenkelseiten der Nutschenkel 40, 50 kann jeweils zwischen 3° und 7°, idealerweise 5° betragen. Die Nuttiefe liegt zwischen 4,3 und 5,3 mm, idealerweise bei 4,6 mm.

Auf der Federseite 3 kann die Wandstärke unterhalb der Feder 30 zwischen 1,1 und 1,8 mm, idealerweise bei 1,3 mm liegen. Die Federbreite in dem unteren Bereich der Feder 30 kann zwischen 2,0 und 2,4 mm, idealerweise bei 2,2 mm liegen. Die Federhöhe kann zwischen 3,9 und 4,9 mm, idealerweise bei 4,2 mm liegen. Der Winkel auf der Federinnenseite beziehungsweise Federaußenseite, das heißt, der Winkel zwischen der Z-Richtung und der dem Gehäuseinneren 100 zugewandten Federflanke 35 beziehungsweise zwischen der Z-Richtung und der dem Gehäuseäußeren 200 zugewandten Flankenseite 36 kann zwischen 3° und 7°, idealerweise 5° betragen. Der Abstand zwischen den Nutschenkeln 40, 50 und der Feder 30 kann jeweils zwischen 0 und 0,1 mm, idealerweise bei 0,05 mm liegen.

Der Abstand zwischen der inneren nutseitigen Schulter 41 und der entsprechenden federseitigen Schulter 31 kann zwischen 0,2 und 0,8 mm, idealerweise bei 0,5 mm liegen.

Die Wandstärke der Gehäusewände kann typischerweise zwischen 1,4 und 1,8 mm, idealerweise bei 1,4 mm liegen.

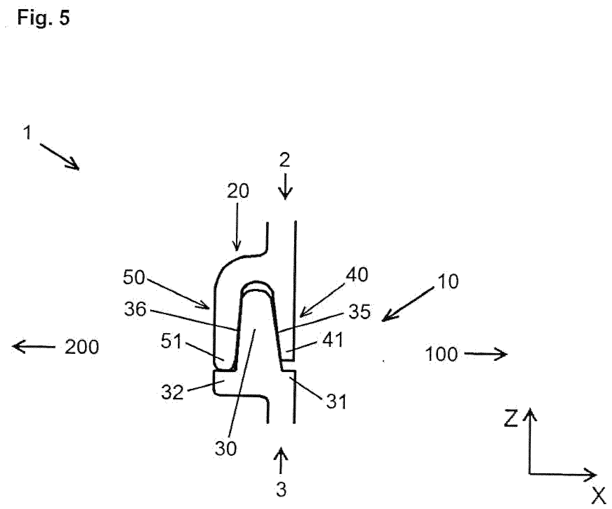

Die Figur 5 zeigt einen Querschnitt einer Nut-Feder-Verbindung 10 in dem eingebrachten Zustand einer Feder 30 in der Nut 20 gemäß einer vierten Ausführungsform der Erfindung. Bei der in der Figur 4 dargestellten Feder-Nut-Verbindung 10 in dem eingebrachten Zustand der Feder 30 in der Nut 20 liegt wieder nur die verrundete Schulter 51 der äußeren Nutschenkel 50 auf der federseitigen Schulter 32 des Gehäuseteils 3 auf. Der innere Nutschenkel 40 ist kürzer als der äußere Nutschenkel 50 und weist eine zurückgesetzte Schulter 41 auf, die nicht auf der entsprechenden federseitigen Schulter 31 aufliegt. Darüber hinaus ist die innere Nutschenkel 40 dünner und damit weicher als der äußere Nutschenkel 50 ausführt.

Dabei wird der Abstand des äußeren Nutschenkels 50 zur Feder 30 auf null reduziert. Eine Überlappung zwischen dem inneren Nutschenkel 40 und der Feder 30 wird durch das Vorhandensein von unterschiedlichen Winkeln auf der Feder 30 und in der Nut 20 erreicht. Der Winkel auf der Feder und in der Nut am äußeren Nutschenkel 50, das heißt, der von der Z-Richtung und der dem Gehäuseäußeren 200 zugewandten Federflanke 36 beziehungsweise von der Z-Richtung und der Innenseite der äußeren Nutschenkel 50 gebildete Winkel, ist gegenüber dem entsprechenden Winkel der in der Figur 1 dargestellten Nut-Feder-Verbindung von 2° auf 5° erhöht.

Die Dichtrichtungen der in der Figur 5 dargestellten Nut-Feder-Verbindung 10 sind die mit Z beziehungsweise mit X gekennzeichneten Richtungen.

Die Abmessungen, wie insbesondere die Gesamtbreite und die Gesamtdicke der in der Figur 5 dargestellten Nut-Feder-Verbindung 10 entsprechen den Abmessungen der in der Figur 1 dargestellten Nut-Feder-Verbindung. Dabei liegt die Gesamtbreite der Nut-Feder-Verbindung 10 zwischen 4,3 und 5 mm, idealerweise bei 4,5 mm. Die Gesamthöhe der Nut-Feder-Verbindung 10 liegt zwischen 7 und 8 mm, idealerweise bei 7,3 mm.

Bei der in der Figur 5 dargestellten Nut-Feder-Verbindung liegt die Dicke der inneren Nutschenkel 40 an seinem freien Ende zwischen 0,6 und 1,1 mm, idealerweise bei 0,8 mm. Die Dicke der äußeren Nutschenkel 50 liegt zwischen 1,0 und 1,4 mm, idealerweise bei 1,1 mm.

Die Schräge auf den Nutschenkelinnenseiten der Nutschenkel 40, 50 kann jeweils zwischen 3° und 7°, idealerweise 5° betragen. Die Nuttiefe liegt zwischen 4,3 und 5,3 mm, idealerweise bei 4,6 mm.

Die Wandstärke der Gehäusewand des federseitigen Gehäuses 3, die sich unterhalb der Feder 30 erstreckt, kann zwischen 1,1 und 1,8 mm, idealerweise bei 1,3 mm liegen. Die Federbreite in dem unteren Bereich der Feder 30 kann zwischen 2,2 und 2,6 mm, idealerweise bei 2,4 mm liegen. Die Federhöhe kann zwischen 3,9 und 4,9 mm, idealerweise bei 4,2 mm liegen. Der Winkel auf der Außenseite der Feder 30, das heißt, der Winkel zwischen der Z-Richtung und der dem Gehäuseäußeren 200 zugewandten Federflanke 36, kann zwischen 3° und 7°, idealerweise 5° betragen. Der Winkel auf der Innenseite der Feder 30, das heißt, der Winkel zwischen der Z-Richtung und der dem Gehäuseinneren 100 zugewandten Federflanke 35, kann zwischen 6° und 10°, idealerweise 8° betragen.

Der Abstand zwischen dem äußeren Nutschenkel 50 und der Feder 30 kann jeweils zwischen 0 und 0,1 mm, idealerweise bei 0 mm liegen. Der Abstand zwischen der Schulter 41 der inneren Nutschenkel 40 und der entsprechenden federseitigen Schulter 31 kann zwischen 0,2 und 0,8 mm, idealerweise bei 0,5 mm liegen.

Die Wandstärke der Gehäusewände kann typischerweise zwischen 1,4 und 1,8 mm, idealerweise bei 1,4 mm liegen.

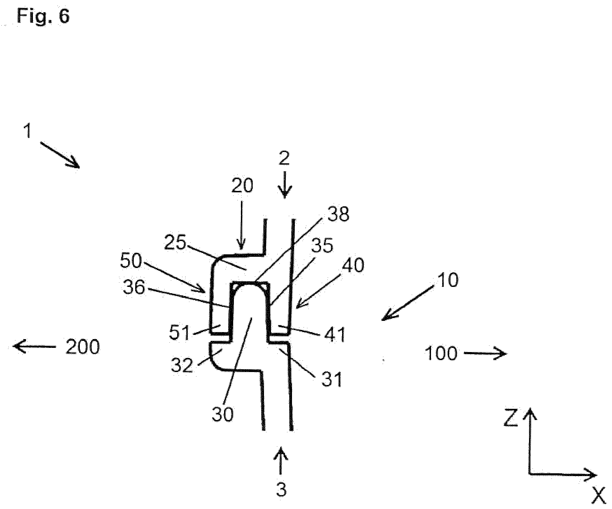

Die Figur 6 zeigt einen Querschnitt einer Nut-Feder-Verbindung 10 in dem eingebrachten Zustand einer Feder 30 in der Nut 20 gemäß einer fünften Ausführungsform der Erfindung. Bei der in der Figur 6 dargestellten Nut-Feder-Verbindung 10 sind beide Schultern 41, 51 der Nutschenkel 40, 50 zurückgesetzt, sodass in dem eingebrachten Zustand der Feder 30 in der Nut 20 die Auflage der Feder 30 an ihrer abgerundeten Federspitze 31 im Nutgrund (Nutboden) 26 erfolgt. Der Nutboden 28 ist dabei flächig ausgebildet. Die frei hängenden Nutschenkel 40, 50 haben die Möglichkeit an den Federflanken 35, 36 mit der Feder 30 in Kontakt zu kommen, was eine zusätzliche Abdichtung zur Folge hat.

Die Hauptdichtrichtung der Nut-Feder-Verbindung 10 verläuft entlang der Z-Richtung. Je nach Verzug kann die Nut-Feder-Verbindung 10 eine zweite in der X-Richtung verlaufende Nebendichtrichtung aufweisen.

Die Abmessungen der in der Figur 6 dargestellten Nut-Feder-Verbindung 10 können im Allgemeinen den Abmessungen der in der Figur 1 oder 4 dargestellten Nut-Feder-Verbindung entsprechen. Die Ausnahmen dabei sind die Erhöhung der Feder 30 um 0,4 mm und der Entfall des Radius im Nutboden 26. Außerdem liegt der Abstand zwischen den beiden nutseitigen Schultern 41, 51 und den entsprechenden federseitigen Auflageschultern 31, 32 zwischen 0,2 und 0,8 mm, idealerweise bei 0,5 mm.

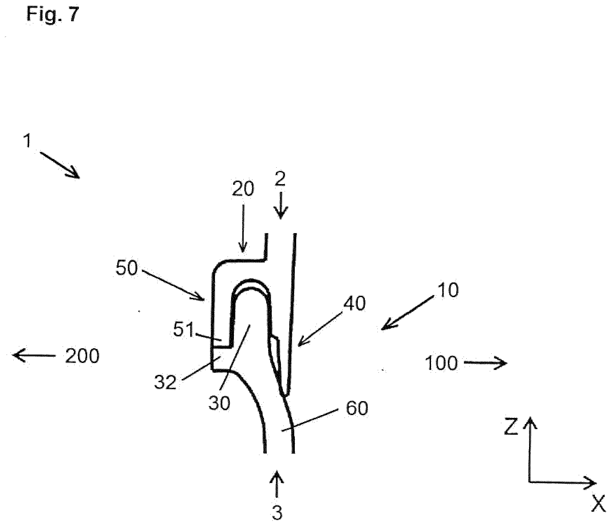

Die Figur 7 zeigt einen Querschnitt einer Nut-Feder-Verbindung 10 in dem eingebrachten Zustand einer Feder 30 in der Nut 20 gemäß einer sechsten Ausführungsform der Erfindung. Bei der in der Figur 7 dargestellten Nut-Feder-Verbindung 10, die in dem eingebrachten Zustand der Feder 30 in der Nut 20 dargestellt ist, liegt der äußere Nutschenkel 50 auf der äußeren federseitigen Schulter 32 des Gehäuseteils 3 auf. Die Feder 30 ist an dem federseitigen Gehäuseteil 3 derartig angeordnet, dass keine dem inneren Nutschenkel 40 entsprechende federseitige Auflageschulter 31 vorhanden ist. Dabei weist die Gehäusewand 60 des federseitigen Gehäuseteils 3 eine derartige Geometrie auf, dass in dem eingebrachten Zustand der Feder 30 in der Nut 20 der innere Nutschenkel 40, der länger als der äußere Nutschenkel 50 ist, auf der Gehäusewand 60 des federseitigen Gehäuseteils 3 aufliegt. Der innere Nutschenkel 40 ist bei dieser Ausführungsform der Erfindung als elastischer Nutschenkel ausgebildet.

Die Abmessungen der in der Figur 7 dargestellten Nut-Feder-Verbindung 10 können an der Außenseite im Allgemeinen den korrespondierenden Abmessungen einer in der Figur 2, 3, 4 oder 5 dargestellten Nut-Feder-Verbindung entsprechen. Ebenso verhalten sich die Geometrien der Nut 20 und der Feder 30 an der Innenseite im oberen Bereich bis etwa zu der Hälfte der Federhöhe. Ab hier verjüngt sich die Wandstärke des inneren Nutschenkels 40 bis der innere Nutschenkel 40 am Ende eine Dicke von insbesondere 0,4 bis 0,8 mm, idealerweise von 0,5 erreicht.

Der innere Nutschenkel 40 ist insbesondere um 2 bis 6 mm, idealerweise um 4 mm länger als der äußere Nutschenkel 50. Der Übergang am inneren Nutschenkel 40 in die Verjungung kann als Stufe oder langsam bis zum Erreichen der vorhin genannten Dicke am Ende ausgeführt sein. An dem federseitigen Gehäuseteil 3 entfällt die innere Schulter. Die Gehäusewand 60 verläuft auf der Federinnenseite unter einem Winkel zu der Z-Richtung, der insbesondere zwischen 10° und 30°, idealerweise bei 20° liegt.

Zwischen dem Ende des inneren Nutschenkels 40 und der Innenwand des federseitigen Gehäuseteils 3, das heißt, zwischen dem Ende des inneren Nutschenkels 40 und der dem Gehäuseinnere 100 zugewandte Seite der Gehäusewand des federseitigen Gehäuseteils 3, wird in der Konstruktionslage ein Übermaß, der insbesondere zwischen 0,05 und 0,2 mm, idealerweise bei 0,1 mm liegt, vorgesehen.

Bei der sechsten Ausführungsform der Erfindung ist insbesondere eine parallele Ausgestaltung des Kontaktbereichs zwischen dem inneren Nutschenkel 40 und der Innenwand 60 der Federseite 3 vorgesehen. Die Innenwand 60 des federseitigen Gehäuseteils 3 folgt dabei der Geometrie des inneren Nutschenkels 40 mit einem Übermaß, der insbesondere zwischen 0,05 und 0,3 mm, idealerweise bei 0,15 mm liegt. Der innere Nutschenkel 40 ist dabei nahezu, das heißt abgesehen von den minimal notwendigen Ausformschrägen, parallel zu der Z-Richtung.

Diese erfindungsgemäße Nut-Feder-Verbindung weist zwei gleichwertige Dichtrichtungen auf, nämlich die Nutschulteranlage in der Z-Richtung und den elastischen Nutschenkel in der X-Richtung.

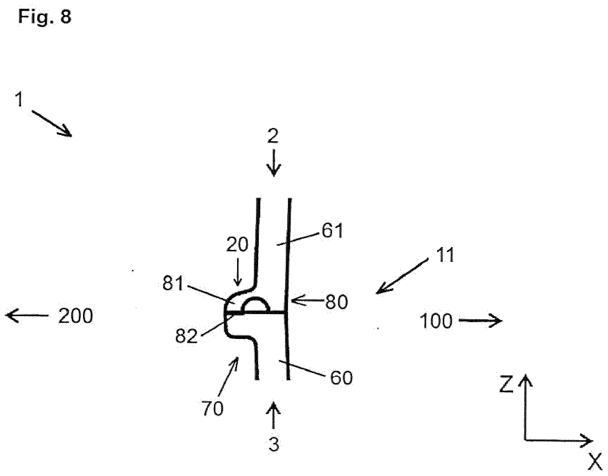

Die Figur 8 zeigt einen Querschnitt einer mechanischen Verbindung zur Verbindung von zwei Gehäuseteilen 2, 3 eines Gehäuses 1 in dem verbundenen Zustand der Gehäuseteile 2, 3 gemäß einer siebten Ausführungsform der Erfindung.

Bei der siebten Ausführungsform der Erfindung wird das System der Nut-Feder-Verbindung verlassen. Das untere Gehäuseteil 3 wird im Bereich der Kontaktstelle als einfaches L-Profil 70 ausgeführt. Die Wandstärke des L-Profils 70 kann zwischen 1,2 und 1,8 mm, idealerweise bei 1,4 mm liegen.

Die obere Gehäusehälfte 2 umfasst grundsätzlich auch ein L-Profil 80. Allerdings wird das L-Profil 80 in der Mitte von unten her verjüngt, sodass sich ein elastischer Schenkel 81 mit einer Wandstärke ergibt, die insbesondere zwischen 0,4 und 1,0 mm, idealerweise bei 0,7 mm liegt. Die Aussparung des L-Profils 80 des oberen Gehäuseteils 2 kann in der Form eckig oder verrundet sein. Das in der Mitte von unten her verjüngte L-Profil 80 des oberen Gehäuseteils 2 weist dabei eine nutartige Geometrie auf und bildet ein nutartiges Profil 20 des oberen Gehäuseteils 2.

In Verlängerung der Gehäusewände 60, 61 ist das obere Gehäuseteil 2 in Kontakt mit dem unteren Gehäuseteil 3. Am Ende der L-förmigen Ausgestaltung 80 und innerhalb eines vorbestimmten Bereichs 82 überlappt das obere Gehäuseteil 2 das untere Gehäuseteil 3 insbesondere zwischen 0,05 und 0,3 mm, idealerweise um 0,15 mm.

Durch das Übermaß des elastischen Schenkels 81 gegenüber dem unteren Gehäuseteil 3 kann Verzug ausgeglichen werden. Die Dichtrichtung ist hier die Z-Richtung.

Bei allen zuvor beschriebenen Ausführungsformen der Erfindung sind die angegebenen Abmessungen der Komponenten beispielhaft. Die Verwendung anderer, nicht explizit angegebener Abmessungen der Komponenten sind bei allen beschriebenen Ausführungsformen der Erfindung denkbar.

### Bezugszeichenliste

- 1: Gehäuse
- 2: ein Gehäuseteil
- 3: ein anderes Gehäuseteil
- 10: Nut-Feder-Verbindung
- 11: mechanische Verbindung
- 20: Nut, nutartiges Profil eines Gehäuseteils
- 25: Nutboden (Nutgrund)
- 26: die der Feder abgewandte Seite des Nutbodens
- 30: Feder
- 31: innere federseitige Schulter
- 32: äußere federseitige Schulter
- 33: die dem Gehäuseinneren zugewandte Seite der inneren federseitigen Schulter
- 34: die dem Gehäuseäußeren zugewandte Seite der äußeren federseitigen Schulter
- 35: Federflanke
- 36: Federflanke
- 37: die der Nut abgewandte Seite der äußeren federseitigen Schulter
- 38: Federspitze
- 40: innerer Nutschenkel
- 41: innere Nutschulter
- 50: äußerer Nutschenkel
- 51: äußere Nutschulter
- 60: Gehäusewand eines Gehäuseteils
- 61: Gehäusewand eines anderen Gehäuseteils
- 70: L-förmiges Profil eines Gehäuseteils
- 80: L-förmiges Profil eines anderen Gehäuseteils
- 81: Elastischer Schenkel
- 82: Überlappungsbereich der Gehäuseteile

## Patentansprüche

1. Gehäuse (1) für eine Kraftfahrzeugklimaanlage, das aus miteinander verbindbaren Gehäuseteilen (2, 3) ausgebildet ist und eine von einem ersten (40, 50) und einem zweiten Nutschenkel (40, 50) begrenzte Nut an einem ersten Gehäuseteil (2) und eine Feder (30) an einem zweiten Gehäuseteil (3) aufweist und bei dem die Feder (30) zur Verbindung der Gehäuseteile (2,3) in der Nut (20) angeordnet ist, wobei der erste und der zweite Nutschenkel (40, 50) derartig ausgebildet sind, dass in dem eingebrachten Zustand der Feder (30) in der Nut (20) mindestens ein Nutschenkel (40, 50) an seinem freien Ende beabstandet von einer entsprechenden federseitigen Auflageschulter (31, 32) des zweiten Gehäuseteils (3) ist, **dadurch gekennzeichnet, dass**: zumindest der Nutschenkel (40, 50), der in dem eingebrachten Zustand der Feder (30) in der Nut (20) auf der entsprechenden federseitigen Schulter (31, 32) des zweiten Gehäuseteils (3) aufliegt, an seinem freien Ende aufgerundet ist und die Verlängerungen der dem Nutinneren zugewandten Nutschenkelseiten und die Verlängerungen der zwei Federflanken (35, 36), an denen die Feder (30) in dem eingebrachten Zustand der Feder (30) in der Nut (20) auf der Nutschenkelinnenfläche aufliegt, unterschiedliche spitze Winkel bilden.

2. Gehäuse nach Anspruch 1, **dadurch gekennzeichnet, dass** die Dichtrichtung (Z), in der die Feder (30) zum Verbinden der Gehäuseteile (2, 3) in die Nut (20) einzuführen ist, unterschiedliche spitze Winkel mit den Verlängerungen der dem Nutinneren 1 zugewandten Nutschenkelseiten und/oder die Dichtrichtung (Z), in der die Feder (30) zum Verbinden der Gehäuseteile (2, 3) in die Nut (20) einzuführen ist, unterschiedliche spitze Winkel mit den Verlängerungen der zwei Federflanken (35, 36) bildet.

3. Gehäuse (1) nach Anspruch 1 oder 2, **dadurch gekennzeichnet, dass** der erste und/oder der zweite Nutschenkel (40, 50) zu seinem freien Ende sich verjüngend ausgebildet ist und/oder dass der erste (40, 50) oder der zweite Nutschenkel (40, 50) dünner als der zweite (40, 50) oder der erste Nutschenkel (40, 50) ausgebildet ist.

4. Gehäuse (1) nach einem der vorangehenden Ansprüche 1, 2 oder 3, **dadurch gekennzeichnet, dass** die Feder (30) und die Nut (20) derartig ausgebildet sind, dass die Federspitze (38) in dem eingebrachten Zustand der Feder (30) in der Nut (20) auf dem Nutboden (25) aufliegt.

5. Gehäuse (1) für eine Kraftfahrzeugklimaanlage nach einem der vorhergehenden Ansprüche 1 bis 4, das aus miteinander verbindbaren Gehäuseteilen (2, 3) ausgebildet ist und eine von einem ersten (50) und einem zweiten Nutschenkel (40) begrenzte Nut (20) an einem ersten Gehäuseteil (2) und eine Feder (30) an einem zweiten Gehäuseteil (3) aufweist und bei dem die Feder (30) zur Verbindung der Gehäuseteile (2, 3) in der Nut (20) angeordnet ist und der erste Nutschenkel (50) in dem eingebrachten Zustand der Feder (30) in der Nut (20) auf einer entsprechenden federseitigen Auflageschulter (32) des zweiten Gehäuseteils (3) aufliegt, **dadurch gekennzeichnet, dass** die Feder (30) derartig an dem zweiten Gehäuseteil (3) angeordnet ist und die federseitige Gehäusewand (60) eine derartige Geometrie aufweist, dass der zweite Nutschenkel (40), der länger als der erste Nutschenkel (50) ausgebildet ist, in dem eingebrachten Zustand der Feder (30) in der Nut (20) auf einer entsprechenden Auflagefläche der federseitigen Gehäusewand (60) des zweiten Gehäuseteils (3) aufliegt.

6. Gehäuse nach Anspruch 5, **dadurch gekennzeichnet, dass** die federseitige Gehäusewand (60) des zweiten Gehäuseteils (3) im Bereich seiner Auflagefläche für den zweiten Nutschenkel (40) ein vorbestimmtes Übermaß gegenüber dem zweiten Nutschenkel (40) im Bereich seiner mit der Auflagefläche kontaktierbaren Fläche aufweist.

7. Gehäuse (1) nach einem der Ansprüche 5 oder 6, **dadurch gekennzeichnet, dass** die federseitige Gehäusewand (60) einen vorbestimmten Winkel mit einer Dichtrichtung (Z), in der die Feder (30) zur Verbindung der Gehäuseteile (2, 3) in die Nut (20) einzuführen ist, bildet und/oder der zweite Nutschenkel (40) zu seinem freien Ende sich verjüngend, insbesondere sich stufenartig verjüngend, ausgebildet ist.

8. Gehäuse (1) nach einem der Ansprüche 5 bis 7, **dadurch gekennzeichnet, dass** der zweite Nutschenkel (40) derartig ausgebildet ist, dass der zweite Nutschenkel (40) in dem eingebrachten Zustand der Feder (30) in der Nut (20) der Geometrie der federseitigen Gehäusewand (60) insbesondere mit dem vorbestimmten Übermaß folgt.

9. Gehäuse (1) für eine Kraftfahrzeugklimaanlage, das aus mindestens zwei miteinander verbindbaren Gehäuseteilen (2, 3) ausgebildet ist und ein nutartiges Profil (20) aufweist, das von einem ersten und einem zweiten Schenkel (81) begrenzt ist und an einem zur Verbindung der Gehäuseteile (2, 3) vorgesehenen Kontaktbereich eines ersten Gehäuseteils (2) der zwei Gehäuseteile (2, 3) angebracht ist, wobei ein zweites Gehäuseteil (3) der zwei Gehäuseteile (2, 3) an seinem zur Verbindung der zwei Gehäuseteile (2, 3) vorgesehenen Kontaktbereich ein L-förmiges Profil aufweist, **dadurch gekennzeichnet, dass**:
der erste Schenkel des nutartiges Profils kürzer als der zweite Schenkel (81) des nutartigen Profils (20) ausgebildet ist und der erste und der zweite Schenkel (81) des nutartigen Profils (20) in dem verbundenen Zustand der zwei Gehäuseteile (2, 3) an seinem freien Enden jeweils auf demselben Schenkel des L-förmigen Profils des zweiten Gehäuseteiles (3) aufliegen.

## Claims

1. A housing (1) for a vehicle air-conditioning system which is formed from interconnectable housing parts (2, 3) and has a groove, delimited by a first (40, 50) and a second groove leg (40, 50), on a first housing part (2) and a tongue (30) on a second housing part (3) and in which to connect the housing parts (2, 3), the tongue (30) is disposed in the groove (20), wherein the first and the second groove legs (40, 50) are formed in such a way that in the inserted state of the tongue (30) in the groove (20) at least one groove leg (40, 50) at its free end is spaced apart from a corresponding tongue-side bearing shoulder (31, 32) of the second housing part (3), **characterised in that**:
at least the groove leg (40, 50) which in the inserted state of the tongue (30) in the groove (20) lies on the corresponding tongue-side shoulder (31, 32) of the second housing part (3) is rounded at its free end and the extensions of the groove leg sides facing the groove interior and the extensions of the two tongue flanks (35, 36) on which the tongue (30) in the inserted state of the tongue (30) in the groove (20) lies on the groove leg inner surface form different acute angles.

2. The housing according to claim 1, **characterised in that** the sealing direction (Z) in which the tongue (30) is to be inserted in the groove (20) in order to connect the housing parts (2, 3) forms different acute angles with the extensions of the groove leg sides facing the groove interior, and/or the sealing direction (Z) in which the tongue (30) is to be inserted in the groove (20) in order to connect the housing parts (2, 3) forms different acute angles with the extensions of the two tongue flanks (35, 36) .

3. The housing (1) according to claim 1 or 2, **characterised in that** the first and/or the second groove leg (40, 50) is formed tapering toward its free end and/or that the first (40, 50) or the second groove leg (40, 50) is formed thinner than the second (40, 50) or the first groove leg (40, 50).

4. The housing (1) according to one of the preceding claims 1, 2 or 3, **characterised in that** the tongue (30) and the groove (20) are formed in such a way that the tongue tip (38) in the inserted state of the tongue (30) in the groove (20) lies on the groove base (25).

5. The housing (1) for a vehicle air-conditioning system according to one of the preceding claims 1 to 4, which is formed from interconnectable housing parts (2, 3) and has a groove (20), delimited by a first (50) and a second groove leg (40), on a first housing part (2) and a tongue (30) on a second housing part (3) and in which the tongue (30) is disposed in the groove (20) in order to connect the housing parts (2, 3) and the first groove leg (50) in the inserted state of the tongue (30) in the groove (20) lies on a corresponding tongue-side bearing shoulder (32) of the second housing part (3), **characterised in that** the tongue (30) is disposed on the second housing part (3) in such a way and the tongue-side housing wall (60) has such a geometry that the second groove leg (40), which is formed longer than the first groove leg (50), in the inserted state of the tongue (30) in the groove (20) lies on a corresponding bearing surface of the tongue-side housing wall (60) of the second housing part (3).

6. The housing according to claim 5, **characterised in that** the tongue-side housing wall (60) of the second housing part (3) in the region of its bearing surface for the second groove leg (40) has a predetermined oversize compared with the second groove leg (40) in the region of its area that contacts the bearing surface.

7. The housing (1) according to one of claims 5 or 6, **characterised in that** the tongue-side housing wall (60) forms a predetermined angle with a sealing direction (Z) in which the tongue (30) is to be inserted in the groove (20) in order to connect the housing parts (2, 3), and/or the second groove leg (40) is formed tapering toward its free end, particularly tapering gradually.

8. The housing (1) according to one of claims 5 to 7, **characterised in that** the second groove leg (40) is formed in such a way that the second groove leg (40) in the inserted state of the tongue (30) in the groove (20) follows the geometry of the tongue-side housing wall (60) particularly with the predetermined oversize.

9. The housing (1) for a vehicle air-conditioning system which is formed from at least two interconnectable housing parts (2, 3) and has a groove-like profile (20) which is delimited by a first and a second leg (81) and is created in a contact region, provided for connecting the housing parts (2, 3), of a first housing part (2) of the two housing parts (2, 3), wherein a second housing part (3) of the two housing parts (2, 3) in its contact region, provided for connecting the two housing parts (2, 3), has an L-shaped profile,
**characterised in that**:
the first leg of the groove-like profile is formed shorter than the second leg (81) of the groove-like profile (20) and in the connected state of the two housing parts (2, 3) the first and second leg (81) of the groove-like profile (20) at their free ends each lie on the same leg of the L-shaped profile of the second housing part (3).

## Revendications

1. Boîtier (1) pour un système de climatisation d'un véhicule automobile, boîtier qui est configuré en se composant de parties de boîtier (2, 3) pouvant être assemblées l'une avec l'autre, et présente, sur une première partie de boîtier (2), une rainure délimitée par une première (40, 50) et par une deuxième branche de rainure (40, 50), et présente une languette (30) sur une deuxième partie de boîtier (3) et dans laquelle la languette (30) servant à l'assemblage des parties de boîtier (2, 3) est disposée dans la rainure (20), où la première et la deuxième branche de rainure (40, 50) sont configurées de manière telle que, quand la languette (30) est introduite dans la rainure (20), au moins une branche de rainure (40, 50), au niveau de son extrémité libre, est espacée d'un épaulement d'appui correspondant (31, 32), côté languette, de la deuxième partie de boîtier (3),
**caractérisé en ce qu'**au moins la branche de rainure (40, 50) qui, quand la languette (30) est introduite dans la rainure (20), vient en appui sur l'épaulement correspondant (31, 32)), côté languette, de la deuxième partie de boîtier (3), est arrondie au niveau de son extrémité libre, et les prolongements des côtés des branches de rainure tournés vers l'intérieur de la rainure et les prolongements des deux flancs de languette (35, 36) au niveau desquels la languette (30), quand la languette (30) est introduite dans la rainure (20), vient en appui sur la surface intérieure des branches de rainure, forment différents angles aigus.

2. Boîtier selon la revendication 1, **caractérisé en ce que** la direction d'étanchéité (Z), suivant laquelle doit être introduite dans la rainure (20) la languette (30) servant à l'assemblage des parties de boîtier (2, 3), forme différents angles aigus avec les prolongements des côtés des branches de rainure tournés vers l'intérieur de la rainure et / ou **en ce que** la direction d'étanchéité (Z), suivant laquelle doit être introduite dans la rainure (20) la languette (30) servant à l'assemblage des parties de boîtier (2, 3), forme différents angles aigus avec les prolongements des deux flancs de languette (35, 36).

3. Boîtier (1) selon la revendication 1 ou 2, **caractérisé en ce que** la première et / ou la deuxième branche de rainure (40, 50) est configurée en se rétrécissant par rapport à son extrémité libre et / ou **en ce que** la première (40, 50) ou la deuxième branche de rainure (40, 50) est configurée en étant plus mince que la deuxième (40, 50) ou la première branche de rainure (40, 50).

4. Boîtier (1) selon l'une des revendications précédentes 1, 2 ou 3, **caractérisé en ce que** la languette (30) et la rainure (20) sont configurées de manière telle, que la pointe (38) de la languette, quand la languette (30) est introduite dans la rainure (20), vienne en appui sur le fond (25) de la rainure.

5. Boîtier (1) pour un système de climatisation d'un véhicule automobile selon l'une quelconque des revendications précédentes 1 à 4, boîtier qui est configuré en se composant de parties de boîtier (2, 3) pouvant être assemblées l'une avec l'autre, et présente, sur une première partie de boîtier (2), une rainure (20) délimitée par une première (50) et par une deuxième branche de rainure (40), et présente une languette (30) sur une deuxième partie de boîtier (3) et dans laquelle est disposée dans la rainure (20) la languette (30) servant à l'assemblage des parties de boîtier (2, 3), et la première branche de rainure (50), quand la languette (30) est introduite dans la rainure (20), vient en appui sur un épaulement d'appui correspondant (32), côté languette, de la deuxième partie de boîtier (3),
**caractérisé en ce que** la languette (30) est disposée sur la deuxième partie de boîtier (3) de telle façon, et la paroi de boîtier (60), côté languette, présente une géométrie telle, que la deuxième branche de rainure (40), qui est configurée en étant plus longue que la première branche de rainure (50), vient en appui, quand la languette (30) est introduite dans la rainure (20), sur une surface d'appui correspondante de la paroi de boîtier (60), côté languette, de la deuxième partie de boîtier (3).

6. Boîtier selon la revendication 5, **caractérisé en ce que** la paroi de boîtier (60), côté languette, de la deuxième partie de boîtier (3) présente, dans la zone de sa surface d'appui pour la deuxième branche de rainure (40), un surdimensionnement prédéfini par rapport à la deuxième branche de rainure (40) dans la zone de sa surface pouvant venir au contact de la surface d'appui.

7. Boîtier (1) selon l'une des revendications 5 ou 6, **caractérisé en ce que** la paroi de boîtier (60), côté languette, forme un angle prédéfini avec une direction d'étanchéité (Z) suivant laquelle doit être introduite dans la rainure (20) la languette (30) servant à l'assemblage des parties de boîtier (2, 3) et / ou **en ce que** la deuxième branche de rainure (40) est configurée en se rétrécissant par rapport à son extrémité libre, se rétrécissant en particulier de façon étagée.

8. Boîtier (1) selon l'une quelconque des revendications 5 à 7, **caractérisé en ce que** la deuxième branche de rainure (40) est configurée de manière telle, que la deuxième branche de rainure (40), quand la languette (30) est introduite dans la rainure (20), suive la géométrie de la paroi de boîtier (60), côté languette, en particulier en ayant le surdimensionnement prédéfini.

9. Boîtier (1) pour un système de climatisation d'un véhicule automobile, boîtier qui est configuré en se composant d'au moins deux parties de boîtier (2, 3) pouvant être assemblées l'une avec l'autre et présente un profil (20) en forme de rainure, profil qui est délimité par une première et par une deuxième branche (81), et est placé sur une zone de contact d'une première partie de boîtier (2) des deux parties de boîtier (2, 3), ladite zone de contact étant prévue pour l'assemblage des parties de boîtier (2, 3), où une deuxième partie de boîtier (3) des deux parties de boîtier (2, 3), au niveau de sa zone de contact prévue pour l'assemblage des deux parties de boîtier (2, 3), présente un profil en forme de L, **caractérisé en ce que** la première branche du profil en forme de rainure est configurée en étant plus courte que la deuxième branche (81) du profil (20) en forme de rainure, et la première et la deuxième branche (81) du profil (20) en forme de rainure, quand les deux parties de boîtier (2, 3) sont assemblées, viennent à chaque fois, au niveau de leurs extrémités libres, en appui sur la même branche du profil en forme de L de la deuxième partie de boîtier (3).
